# EUROPEAN PATENT APPLICATION

(11) **EP 4 718 317 A1**
(43) Date of publication of application: **01.04.2026**
(21) Application number: 24811425.8
(22) Date of filing: 23.05.2024
(51) Int. Cl.: G06K 19/077, B32B 15/08, B32B 7/12

(54) **SMART IC SUBSTRATE, SMART IC MODULE, AND IC CARD COMPRISING SAME**

(30) Priority: 23.05.2023 KR 20230066602; 20.07.2023 KR 20230094857
(71) Applicant: LG INNOTEK CO., LTD., Seoul 07796 (KR)
(72) Inventor: OH, Jung Hun, Seoul 07796 (KR); LEE, Seung Jin, Seoul 07796 (KR); HYEON, Jeong Min, Seoul 07796 (KR)
(74) Representative: DREISS Patentanwälte PartG mbB
(86) International application number: PCT/KR2024/007004
(87) International publication number: WO 2024/242487

(57) **Abstract**

A smart IC substrate according to an embodiment includes a substrate including a first surface and a second surface opposite to the first surface; a bonding layer disposed on the first surface; a metal layer disposed on the bonding layer; a first plating layer disposed on one surface of the metal layer; and a second plating layer disposed on the other surface of the metal layer, wherein the first plating layer includes a first-first layer and a first-second layer on the first-first layer, the second plating layer includes a second-first layer and a second-second layer on the second-first layer, the second-second layer includes a different metal from the first-second layer, and a protective layer is disposed on the second-second layer, and the protective layer includes a metal having lower reactivity than the second-second layer.

## Description

### [Technical Field]

An embodiment relates to a smart IC substrate, a smart IC module, and an IC card including the same.

### [Background Art]

An IC card is a plastic card with an integrated circuit chip capable of storing and processing information. The IC card is equipped with an IC that stores necessary information and transmits the information to a reader in a form of an electrical signal.

The IC card is manufactured by inserting a smart IC module into a card body.

The smart IC module is classified as a single type or a dual type depending on the arrangement of the metal layers. The single type has a metal layer and a plating layer disposed on only one surface of the substrate. The dual type has the metal layer and plating layer disposed on both surfaces of the substrate.

In addition, the above smart IC modules are classified into contact, contactless, hybrid, and combi cards depending on how the card is used. The contact card transmits and receives information through physical contact. The contactless card transmits and receives information without physical contact. In addition, hybrid cards and combination cards include both contact and contactless functions.

Accordingly, the smart IC module includes a contact surface and a bonding surface. The contact surface contacts an external device, and a chip is disposed on the bonding surface. The bonding surface is inserted into the card body.

The chip disposed on the bonding surface and a conductive pattern disposed on the contact surface are electrically connected by wire bonding. Accordingly, the smart IC module includes a plurality of holes. The chip and the conductive pattern are wire bonded through the holes.

To facilitate the wire bonding, the conductive pattern includes a pad part. The pad part is formed by a plating layer. The wire and the plating layer include metal. A material of the wire may be limited by a metal of the plating layer.

For example, the metal of the wire may be limited by a strength, a resistance, and an electrical conductivity of the metal of the plating layer. In addition, the plating layer may corrode during the process. This may reduce the electrical conductivity of the plating layer.

Therefore, a new structure of a smart IC substrate, a smart IC module, and an IC card including the same that can solve the above problems is required.

A prior art related to the smart IC substrate is disclosed in Korean Patent Publication No. KR10-2022-0110247.

### [Disclosure]

### [Technical Problem]

An embodiment provides a smart IC substrate with improved reliability.

In addition, the embodiment provides a smart IC substrate to which wires of various materials can be applied.

In addition, the embodiment provides a smart IC module and an IC card with improved process efficiency.

### [Technical Solution]

A smart IC substrate according to an embodiment includes a substrate including a first surface and a second surface opposite to the first surface; a bonding layer disposed on the first surface; a metal layer disposed on the bonding layer; a first plating layer disposed on one surface of the metal layer; and a second plating layer disposed on the other surface of the metal layer, wherein the first plating layer includes a first-first layer and a first-second layer on the first-first layer, the second plating layer includes a second-first layer and a second-second layer on the second-first layer, the second-second layer includes a different metal from the first-second layer, and a protective layer is disposed on the second-second layer, and the protective layer includes a metal having lower reactivity than the second-second layer.

### [Advantageous Effects]

A smart IC substrate according to an embodiment includes a protective layer. The protective layer includes a metal having a lower reactivity than the plating layer. Specifically, the protective layer includes a metal having a lower ionization tendency than the plating layer.

Specifically, the protective layer includes a metal having a lower reactivity than a second-second layer. Accordingly, the second-second layer can be prevented from oxidation or discoloration. Alternatively, when the second-second layer is partially oxidized during a process, a corrosion rate of the second-second layer can be reduced.

Consequently, the electrical conductivity and rigidity of the second plating layer are maintained. Therefore, it is possible to prevent damage to the second plating layer during wire bonding. In addition, electrical connection characteristics between a chip and a conductive pattern after wire bonding are improved.

In addition, a corrosion rate of the second plating layer is reduced. Therefore, the electrical conductivity of the second plating layer is maintained. Therefore, the electrical connection characteristics between the chip and the conductive pattern can be maintained during use of the IC card.

In addition, the protective layer may be formed by a same process as the first plating layer. Specifically, the protective layer may be formed by a same process as the first-second layer. Therefore, a separate process for forming the protective layer is omitted. Accordingly, process efficiency may be improved.

In addition, a smart IC substrate according to an additional embodiment includes a first plating layer and a second plating layer. The second plating layer is wire-bonded to the chip. The first plating layer includes a first-first layer and a first-second layer on the first-first layer. The second plating layer includes a second-first layer and a second-second layer on the second-first layer.

The materials of the first plating layer and the second plating layer are different. The second-second layer has a lower melting point and resistivity than the first-second layer. In addition, the second-second layer has higher electrical and thermal conductivity than the first-second layer. Accordingly, the process efficiency and electrical characteristics of the smart IC module are improved.

Furthermore, the second-second layer is formed with a greater thickness than the first-second layer. At this time, the second-second layer is formed of a material other than gold. Therefore, process costs are reduced.

In addition, a smart IC substrate according to an additional embodiment may further include a second-third layer. Accordingly, the second-second layer and the second-third layer may form a gold-silver alloy. Therefore, the hardness of the second plating layer is improved. Consequently, when wire-bonding the second plating layer and the chip, cracking of the second plating layer can be prevented. In addition, a material having high hardness may be applied as the material of the wire. Therefore, wires of various materials may be used.

In addition, the second-third layer may be formed using a same process as the first-second layer. In addition, the second-third layer is formed with a thin film thickness. Accordingly, the process efficiency of the smart IC substrate is improved.

Furthermore, a smart IC substrate according to an additional embodiment may further include a second-fourth layer. Accordingly, the second-second layer and the second-third layer may form a gold-silver alloy. In addition, the second-third layer and the second-fourth layer may form a gold-silver alloy. Therefore, the hardness of the second plating layer is improved. Accordingly, cracking of the second plating layer can be prevented when wire-bonding the second plating layer and the chip. In addition, a material with high hardness can be used as the wire material. Therefore, wires of various materials can be used.

Furthermore, the second-fourth layer may be formed using a same process as the first-second layer. In addition, the second-fourth layer may be formed with a thin film thickness. Therefore, the process efficiency of the smart IC substrate is improved.

### [Description of Drawings]

FIG. 1 is a top view of a first surface of a smart IC substrate according to a first embodiment.
FIG. 2 is a top view of a second surface of a smart IC substrate according to the first embodiment.
FIG. 3 is a cross-sectional view taken along region A-A' of FIG. 2.
FIG. 4 is a top view of a second surface of a smart IC module according to a first embodiment.
FIG. 5 is a cross-sectional view taken along region B-B' of FIG. 4.
FIG. 6 is a top view of a first surface of a smart IC substrate according to a second embodiment.
FIG. 7 is a top view of a second surface of a smart IC substrate according to a second embodiment.
FIG. 8 is a cross-sectional view taken along region C-C' of FIG. 7.
FIG. 9 is a top view of a second surface of a smart IC module according to a second embodiment.
FIG. 10 is a cross-sectional view taken along region D-D'of FIG. 9.
FIG. 11 is a top view of the first surface of a smart IC substrate according to a third embodiment.
FIG. 12 is a top view of a second surface of a smart IC substrate according to a third embodiment.
FIG. 13 is a cross-sectional view taken along region E-E' of FIG. 12.
FIG. 14 is a cross-sectional view taken along region E-E' of FIG. 12.
FIG. 15 is a top view of a second surface of a smart IC module according to a third embodiment.
FIG. 16 is a cross-sectional view taken along region G-G' of FIG. 15.
FIGS. 17 and 18 are cross-sectional views taken along region H-H' of FIG. 15.
FIGS. 19 to 22 are drawings illustrating various embodiments of the second plating layer illustrated in FIGS. 1 to 18.
FIG. 23 is an exploded perspective view of a smart IC card according to an embodiment.
FIG. 24 is a drawing illustrating the assembly of a smart IC module according to an embodiment.

### [Modes of the Invention]

Hereinafter, embodiments of the present disclosure will be described in detail with reference to the accompanying drawings. However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which the present disclosure belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements.

In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements.

Further, when expressed as "on (over)" or "under (below)", it may include not only the upper direction but also the lower direction based on one element.

Hereinafter, a smart IC substrate, a smart IC module, and a smart IC card including the same according to an embodiment will be described with reference to the drawings.

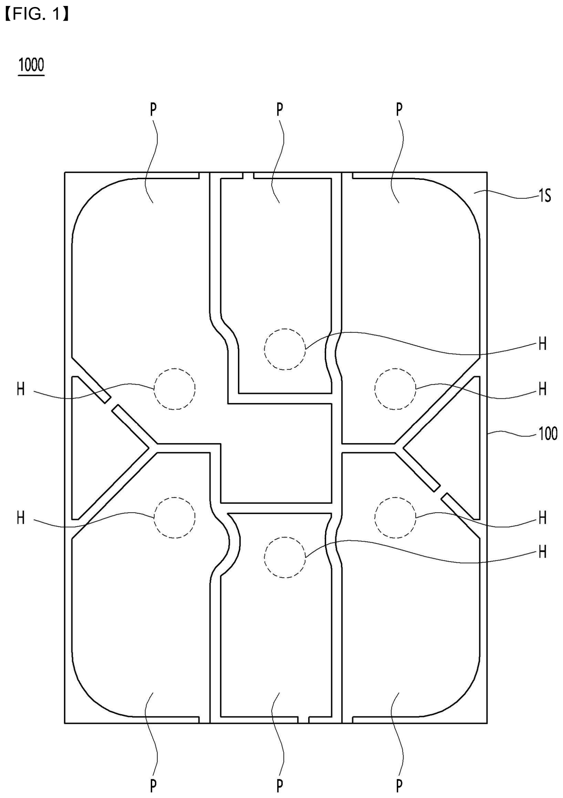

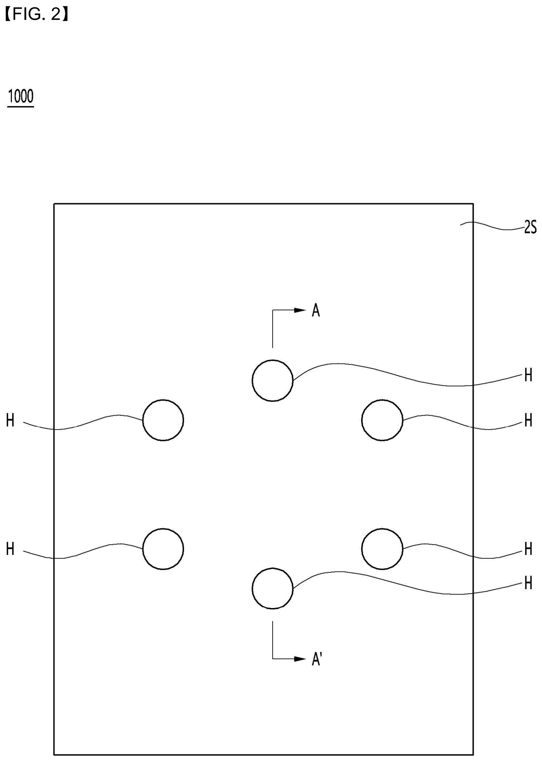

A smart IC substrate 1000 and a smart IC module 2000 according to a first embodiment will be described with reference to FIGS. 1 to 5.

Referring to FIGS. 1 to 3, the smart IC substrate includes a substrate 100, a bonding layer 200, a metal layer 300, and a plating layer.

The substrate 100 includes a first surface 1S and a second surface 2S. The first surface 1S and the second surface 2S are opposite surfaces.

The first surface 1S is a contact surface. Specifically, the first surface 1S is a surface capable of recognizing information of the smart IC module through direct or indirect contact. In addition, the second surface 2S is a bonding surface. Specifically, the second surface 2S is a surface on which a chip is mounted and bonded to a body of the IC card.

The substrate 100 includes a resin material. The substrate 100 may include a prepreg containing glass fibers. Specifically, the substrate 100 may include a material in which glass fibers and a silicon-based filler (Si filler) are dispersed within an epoxy resin.

Alternatively, the substrate 100 may be rigid or flexible. For example, the substrate 100 may include glass or plastic. Specifically, the substrate 100 may include chemically strengthened/semi-strengthened glass, such as soda lime glass or aluminosilicate glass. Alternatively, the substrate 100 may include polyimide (PI), polyethylene terephthalate (PET), propylene glycol (PPG), polycarbonate (PC), or sapphire.

Alternatively, the substrate 100 may include an optically isotropic film. For example, the substrate 100 may include cyclic olefin copolymer (COC), cyclic olefin polymer (COP), optically isotropic polycarbonate (PC), or optically isotropic polymethyl methacrylate (PMMA).

Alternatively, the substrate 100 may be bent while having a partially curved surface. That is, the substrate 100 may be bent while having a partially flat surface and a partially curved surface. Specifically, an end of the substrate 100 may be bent while having a curved surface. Alternatively, the substrate 100 may be bent while having a random curvature.

The substrate 100 may have a thickness within a set range. For example, the thickness of the substrate 100 may be 80 µm to 150 µm, 90 µm to 140 µm, or 100 µm to 120 µm. If the thickness of the substrate 100 is less than 80 µm, a supporting force of the substrate 100 decreases. In addition, if the thickness of the substrate 100 exceeds 150 µm, the thickness of the smart IC substrate may increase. As a result, the size of the IC card is increased.

The substrate 100 has insulating properties. Therefore, the substrate 100 prevents short circuits between circuits. In addition, the substrate 100 serves to support the circuit during a process of forming the circuit.

The substrate 100 includes holes. Specifically, the substrate 100 includes a plurality of holes H spaced apart from each other in a horizontal direction.

At least one hole among the plurality of holes is a region for wire bonding. For example, all of the plurality of holes are regions for wire bonding. Alternatively, some of the plurality of holes may be a region for wire bonding, and another part of the plurality of holes may be a region for wire bonding. The chip C and the plating layer are wire-bonded through the hole H.

The hole H has a width within a set range. The width of the hole H may be defined as a diameter of the hole or a minimum distance between inner surfaces of the hole. For example, the width of the hole H may be 500 µm to 1,000 µm, 600 µm to 900 µm, or 700 µm to 800 µm. If the width of the hole H is less than 500 µm, wire bonding through the hole H becomes difficult. In addition, if the width of the hole H exceeds 1,000 µm, a supporting force of the substrate 100 decreases.

The bonding layer 200 is disposed on the substrate 100. Specifically, a bonding layer 200 is disposed on the first surface 1S.

The bonding layer 200 includes a resin material. For example, the bonding layer 200 may include at least one of epoxy resin, acrylic resin, and polyimide resin. In addition, the bonding layer 200 may include at least one additive selected from a group consisting of natural rubber, a plasticizer, a curing agent, and a phosphorus-based flame retardant. This enhances the flexibility of the bonding layer 200.

A bonding layer 200 may have a thickness within a set range. For example, the thickness of the bonding layer 200 may range from 15 µm to 35 µm, 20 µm to 30 µm, or 22 µm to 28 µm. If the thickness of the bonding layer 200 is less than 15 µm, the adhesive strength of the bonding layer 200 decreases. This may cause the metal layer to peel off on the bonding layer 200. In addition, if the thickness of the bonding layer 200 exceeds 35 µm, the thickness of the smart IC substrate may increase. As a result, the size of the IC card increases.

A metal layer 300 is disposed on the substrate 100. The metal layer 300 is disposed on the bonding layer 200. The metal layer 300 includes a metal material. For example, the metal layer 300 may include at least one material selected from a group consisting of gold (Au), silver (Ag), platinum (Pt), titanium (Ti), tin (Sn), copper (Cu), and zinc (Zn). Preferably, the metal layer 300 includes copper.

The metal layer 300 may have a thickness within a set range. For example, the thickness of the metal layer 300 may be 30 µm to 75 µm, 40 µm to 65 µm, or 50 µm to 60 µm. If the thickness of the metal layer 300 is less than 30 µm, the resistance of the metal layer 300 increases. In addition, if the thickness of the metal layer 300 exceeds 75 µm, the thickness of the smart IC substrate may increase. As a result, a size of the IC card is increased. In addition, process efficiency may decrease.

The metal layer 300 includes a plurality of conductive patterns P. The conductive patterns P may be formed by patterning the metal layer 300.

The conductive patterns P are disposed on the first surface 1S. The conductive patterns P are disposed on the bonding layer 200. The conductive patterns P are disposed on the contact surface. The conductive patterns P are disposed spaced apart from each other on the first surface 1S. The holes H are disposed in regions corresponding to each conductive pattern P.

The plating layer is disposed on the metal layer 300. Specifically, the plating layer is disposed on one surface 301 of the metal layer and the other surface 302 opposite to the one surface 301.

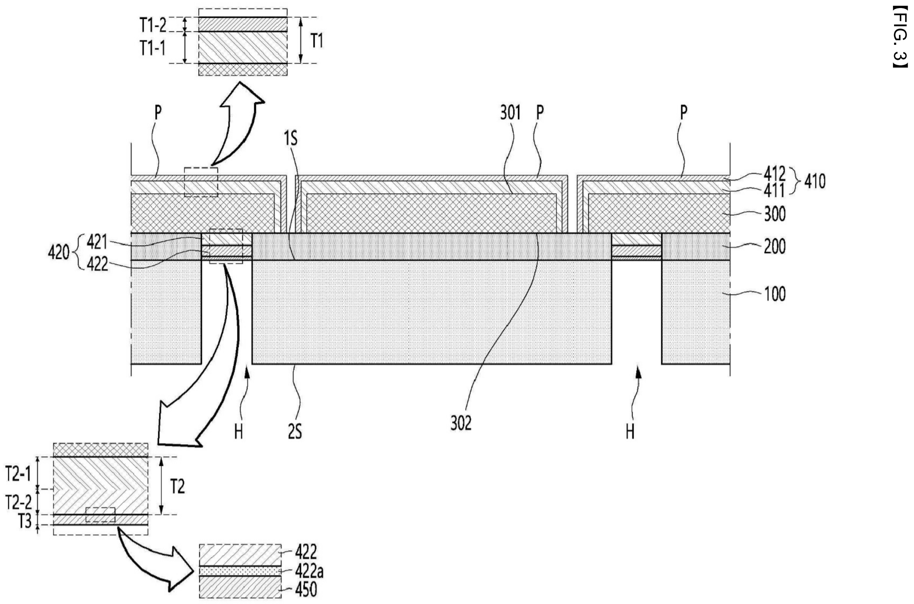

Referring to FIG. 3, the plating layer is divided into a plurality of plating layers depending on their positions. In detail, the plating layer may include a first plating layer 410 and a second plating layer 420 disposed at different positions. The first plating layer 410 may be referred to as an upper plating layer, and the second plating layer 420 may be referred to as a lower plating layer.

The first plating layer 410 is disposed on one surface 301 of the metal layer 300. The conductive pattern P is formed by the metal layer 300 and the first plating layer 410. The second plating layer 420 is disposed on the other surface 302 of the metal layer 300. The second plating layer 420 is disposed in a region overlapping the hole H. The second plating layer 420 may be a pad part to which the wire is bonded. That is, the second plating layer 420 may be disposed within the hole H. The second plating layer 420 is disposed on the other surface 302 of the metal layer 300 exposed through the hole H.

The first plating layer 410 includes a first-first layer 411 and a first-second layer 412. The first-first layer 411 contacts the metal layer 300. The first-second layer 412 contacts the first-first layer 411. Accordingly, the first-first layer 411 is disposed between the metal layer 300 and the first-second layer 412.

Meanwhile, although not shown in the drawing, an organic coating layer may be further disposed on the first-second layer 412. The organic coating layer protects the first-second layer 412. Accordingly, corrosion of the first-second layer 412 can be prevented.

The second plating layer 420 includes a second-first layer 421 and a second-second layer 422. The second-first layer 421 contacts the metal layer 300. The second-second layer 422 contacts the second-first layer 421. Accordingly, the second-first layer 421 is disposed between the metal layer 300 and the second-second layer 422.

The first-first layer 411 and the second-first layer 421 may include a same material. Specifically, the first-first layer 411 and the second-first layer 421 may include a same metal. For example, the first-first layer 411 and the second-first layer 421 may include nickel.

The first-second layer 412 and the second-second layer 422 may include different materials. In detail, the first-second layer 412 and the second-second layer 422 may include different metals. For example, the first-second layer 412 may include gold (Au) or palladium (Pd). In addition, the second-second layer 422 may include silver (Ag).

The wire is bonded to the second plating layer 420. Accordingly, the second plating layer 420 must be formed to a sufficient thickness. Accordingly, if the second-second layer 422 includes gold, the process cost may increase. Since the second-second layer 422 includes silver, the increase in process cost can be prevented even if the second-second layer 422 is formed to a sufficient thickness.

The first plating layer 410 and the second plating layer 420 may have different sizes. For example, a thickness T1 of the first plating layer 410 and a thickness T2 of the second plating layer 420 may be different.

The thickness T2 of the second plating layer 420 is greater than the thickness T1 of the first plating layer 410. A thickness T1-1 of the first-first layer 411 and a thickness T2-1 of the second-first layer 421 may be different. In detail, the thickness T1-1 of the first-first layer 411 may be smaller than the thickness T2-1 of the second-first layer 421. In addition, a thickness T1-2 of the first-second layer 412 and a thickness T2-2 of the second-second layer 422 may be different. In detail, the thickness T1-2 of the first-second layer 412 may be smaller than the thickness T2-2 of the second-second layer 422. Accordingly, the thickness T2 of the second plating layer 420 is greater than the thickness T1 of the first plating layer 410.

The thickness T1-1 of the first-first layer 411 may be 1 µm to 3 µm. In addition, the thickness T2-1 of the second-first layer 421 may be 2 µm to 9 µm.

The thickness T1-2 of the first-second layer 412 may be 0.01 µm to 0.1 µm. The first plating layer 410 is disposed on the first surface 1S of the substrate 100. Therefore, the first plating layer 410 may be exposed to an outside of the IC card. The first-first layer 411 contains nickel. This can transmit harmful toxicity to the user.

Therefore, the first-second layer 421 is disposed on the first-first layer 411. This prevents the first-first layer 411 from being exposed to the outside. In addition, the first-second layer 422 contains gold. This prevents corrosion of the first plating layer 410. In addition, this improves the aesthetics of the user. In addition, the first-second layer 412 is disposed with a very thin thickness. Therefore, process cost is reduced and process efficiency is improved.

The thickness T2-2 of the second-second layer 422 may be 1 µm to 9 µm, 2 µm to 8 µm, or 3 µm to 7 µm. The second plating layer 420 is wire-bonded to the chip C. Therefore, the thickness T2-2 of the second-second layer 422 is greater than the thickness of the first-second layer 412. If the thickness T2-2 of the second-second layer 422 is less than 1 µm, the wire is not stably bonded. In addition, if the thickness T2-2 of the second-second layer 422 exceeds 9 µm, process costs increase and process efficiency decreases.

The wire is bonded to the second-second layer 422. If the organic coating layer is disposed on the second-second layer 422, the wire and the second-second layer 422 are not bonded. In addition, the wire and the second-second layer 422 are not electrically connected. Accordingly, the organic coating layer is not disposed on the second-second layer 422. In addition, silver has greater reactivity than gold. Therefore, the second-second layer 422 containing silver can be easily corroded.

Accordingly, the second-second layer 422 may be oxidized. Specifically, the second-second layer 422 may be oxidized during processing or use. In addition, a oxidation rate of the second-second layer 422 may be high. Alternatively, the second-second layer 422 may be discolored.

Accordingly, the smart IC substrate includes a protective layer 450. The protective layer 450 is disposed on the other surface 302 of the metal layer. The protective layer 450 is disposed on the second-second layer 422. The protective layer 450 may be in contact with the second-second layer 422.

Alternatively, the second-second layer 422 may be oxidized during the process. Accordingly, a thin oxide layer 422a may be formed on the second-second layer 422. If the oxide layer 422a becomes thicker, the second plating layer 420 may be damaged during wire bonding.

The oxide layer 422a is disposed to a very thin thickness. The oxide layer 422a is disposed to a thin film thickness. The oxide layer 422a is formed to a thickness that does not impede signal movement from the protective layer 450 to the second-second layer 422.

A thickness of the oxide layer 422a may be smaller than that of the second-first layer 421. The thickness of the oxide layer 422a may be smaller than that of the first-second layer 412. The thickness of the oxide layer 422a may be smaller than that of the protective layer 450.

For example, the oxide layer 422a may include silver oxide (Ag₂O). Accordingly, the protective layer 450 may be disposed on the oxide layer 422a. Therefore, the protective layer 450 may be in contact with the oxide layer 422a.

The protective layer 450 includes a conductive material. For example, the protective layer 450 may include a metal. Specifically, the protective layer 450 may include a metal with lower reactivity than the second-second layer 422. Specifically, the protective layer 450 may include a metal with lower ionization tendency than the second-second layer 422. For example, the protective layer 450 may include palladium (Pd), iridium (Ir), platinum (Pt), or gold (Au). For example, the protective layer 450 may include gold or palladium.

If the protective layer 450 includes gold or palladium, process efficiency may be improved. Specifically, the protective layer 450 may be formed simultaneously with the first-second layer 412. Accordingly, a process of forming the protective layer 450 separately is omitted.

The protective layer 450 may be formed with a thickness within a set range. The thickness T3 of the protective layer 450 may be smaller than the thickness T1-1 of the first-first layer. The thickness T3 of the protective layer 450 may be smaller than the thickness T1-2 of the first-second layer. The thickness T3 of the protective layer 450 may be smaller than the thickness T2-1 of the second-first layer. The thickness T3 of the protective layer 450 may be smaller than the thickness T2-2 of the second-second layer.

The protective layer 450 may have a thin film thickness. In detail, the thickness T3 of the protective layer may be less than 0.03 µm. More specifically, the thickness T3 of the protective layer may be 0.001 µm to less than 0.03 µm, 0.002 µm to 0.02 µm, or 0.003 µm to 0.01 µm.

If the thickness of the protective layer 450 is less than 0.001 µm, the protective layer 450 cannot effectively protect the second-second layer. As a result, the second-second layer 422 may be significantly oxidized, a thickness of the oxide layer 422a may be increased. In addition, if the thickness of the protective layer 450 is 0.03 µm or more, process efficiency decreases and process costs increase.

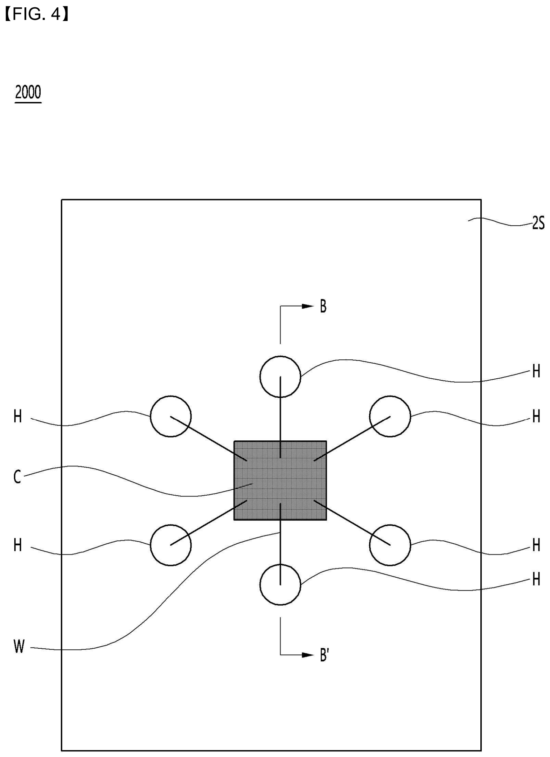

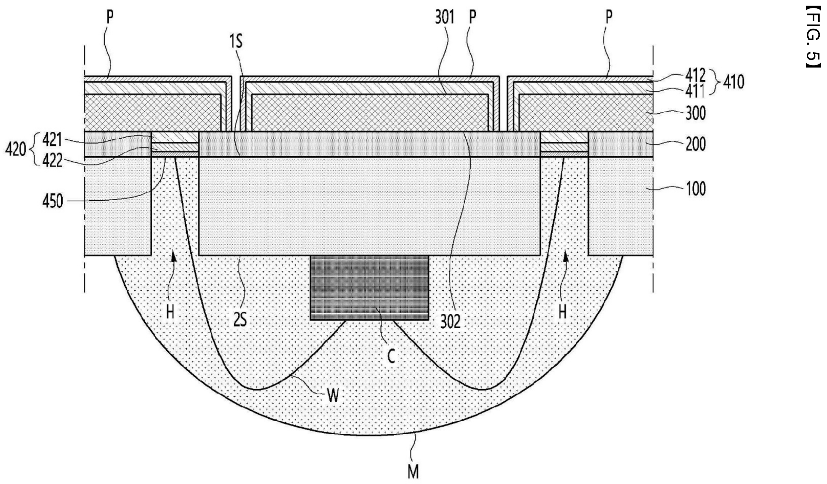

Hereinafter, a smart IC module according to the first embodiment will be described with reference to FIGS. 4 and 5 .

Referring to FIGS. 4 and 5 , the smart IC module 2000 includes the smart IC substrate 1000 and chip C described above.

The chip C is disposed on the second surface 2S. Specifically, the chip C is disposed on the bonding surface.

The chip C is connected to the second plating layer 420. Specifically, the chip C and the second plating layer 430 are wire-bonded by a wire W. Accordingly, the chip C and the conductive patterns P are electrically connected.

The wire W includes a metal. Specifically, the wire W may include the same or a different material as the second plating layer 420. For example, the wire W may include gold, copper, or aluminum.

A molding member M may be disposed on the chip C. The molding member M is disposed to cover the chip C and the wire W. Accordingly, damage to the wire bonding due to external impact can be prevented.

The smart IC substrate according to the first embodiment includes the protective layer. The protective layer includes a metal with lower reactivity than the second-second layer. Therefore, oxidation or discoloration of the second-second layer can be prevented. Alternatively, when the second-second layer is partially oxidized during the process, a corrosion rate of the second-second layer can be reduced.

Therefore, the electrical conductivity and rigidity of the second plating layer are maintained. Therefore, it is possible to prevent damage to the second plating layer during wire bonding. In addition, the electrical connection characteristics between the chip and the conductive pattern after wire bonding are improved.

In addition, a corrosion rate of the second plating layer is reduced. Therefore, the electrical conductivity of the second plating layer is maintained. Therefore, the electrical connection characteristics between the chip and the conductive pattern can be maintained during use of the IC card.

In addition, the protective layer may be formed by a same process as the first plating layer. Therefore, a separate process for forming the protective layer is omitted. Accordingly, process efficiency may be improved.

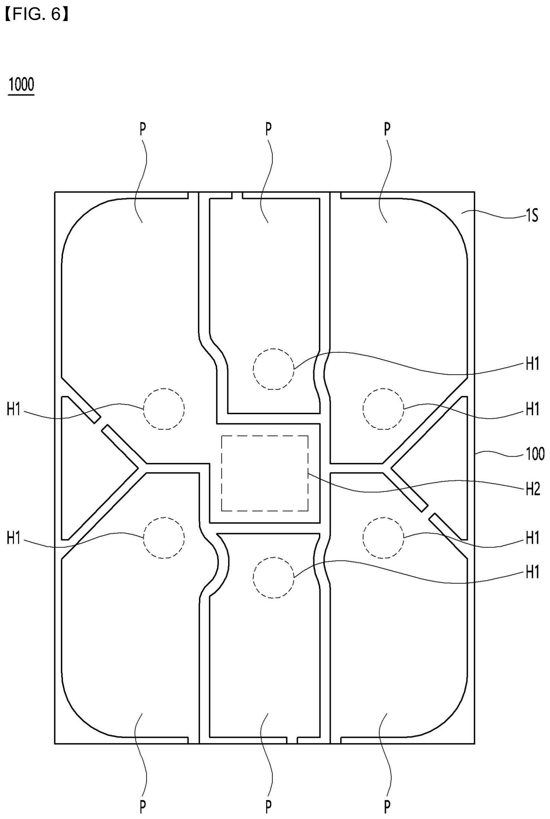

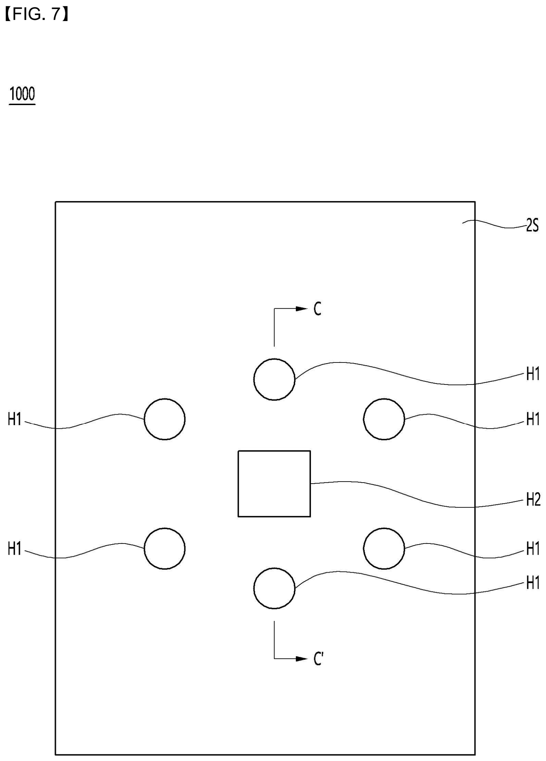

Hereinafter, a smart IC substrate and smart IC module according to a second embodiment will be described with reference to FIGS. 6 to 10. Descriptions of similar or identical components to those of the first embodiment will be omitted. In addition, identical reference numerals are used for components identical to those of the first embodiment.

Referring to FIGS. 6 to 8, a smart IC substrate according to the second embodiment includes a substrate 100, a bonding layer 200, a metal layer 300, and a plating layer.

The substrate 100 includes a first surface 1S and a second surface 2S. The first surface 1S and the second surface 2S are opposite surfaces. The first surface 1S is defined as a contact surface. The second surface 2S is defined as a bonding surface.

The material, shape, and thickness of the substrate 100 are identical to those of the first embodiment.

The substrate 100 includes a hole. In detail, the substrate 100 includes a first hole H1 and a second hole H2.

A size of the first hole H1 is different from a size of the second hole H2. In detail, the size of the first hole H1 is smaller than the size of the second hole H2. A shape of the first hole H1 is different from a shape of the second hole H2. For example, the first hole H1 may be formed in a circular shape. In addition, the second hole H2 may be formed in a polygonal shape. In addition, a number of the first holes H1 is different from a number of the second holes H2. In detail, the number of the first holes H1 is greater than the number of the second holes H2.

The second hole H2 is a region where a chip C is disposed. The first hole H1 is a region where wire bonding performs. That is, the chip C disposed in the second hole H2 is wire bonded to the plating layer through the first hole H1.

The first hole H1 includes a plurality of holes. At least one of the plurality of holes is a region where wire bonding performs. For example, all of the plurality of holes are regions where wire bonding performs. Alternatively, some of the plurality of holes are regions where wire bonding performs.

The first hole H1 has a width within a set range. The width of the first hole H1 may be defined as a diameter of the first hole or a minimum distance between inner surfaces of the first hole. For example, the width of the first hole H1 may be 500 µm to 1,000 µm, 600 µm to 900 µm, or 700 µm to 800 µm. If the width of the first hole H1 is less than 500 µm, wire bonding through the first hole H1 becomes difficult. In addition, if the width of the first hole H1 exceeds 1,000 µm, the support force of the substrate 100 decreases.

The bonding layer 200 is disposed on the substrate 100. The material and thickness of the bonding layer 200 are the same as those in the first embodiment.

The metal layer 300 is disposed on the substrate 100. The metal layer 300 is disposed on the bonding layer 200. The material and thickness of the metal layer 300 are the same as those in the first embodiment.

The metal layer 300 includes a plurality of conductive patterns P. The conductive patterns P are formed by patterning the metal layer 300.

The conductive patterns P are disposed on the first surface 1S. The conductive patterns P are disposed on the bonding layer 200. The conductive patterns P are disposed on the contact surface.

The conductive patterns P are disposed spaced apart from each other. The holes H are disposed in regions corresponding to each conductive pattern P.

The plating layer is disposed on the metal layer 300. Specifically, the plating layer is disposed on one surface 301 of the metal layer and the other surface 302 opposite the one surface 301 of the metal layer.

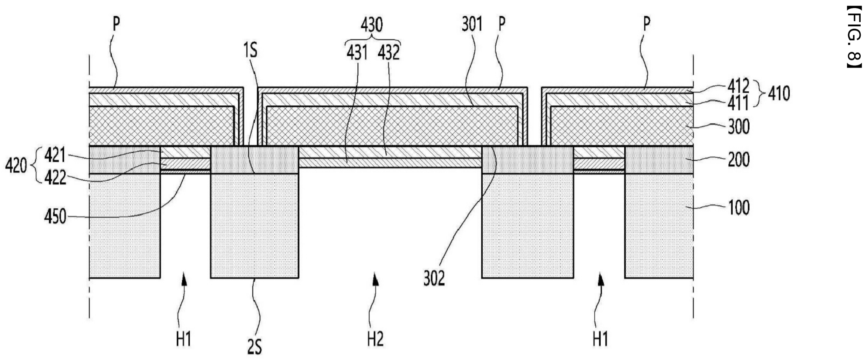

Referring to FIG. 8, the plating layer is divided into multiple plating layers according to their positions. Specifically, the plating layer may include a first plating layer 410, a second plating layer 420, and a third plating layer 430 disposed at different positions. The second plating layer 420 may be a pad part to which the wire is bonded.

The first plating layer 410 is disposed on one surface 301 of the metal layer 300. The second plating layer 420 and the third metal layer 430 are disposed on the other surface 302 of the metal layer 300. The second plating layer 420 is disposed in a region overlapping the first hole H1. The third plating layer 430 is disposed in a region overlapping the second hole H2.

The first plating layer 410 includes a first-first layer 411 and a first-second layer 412. The first-first layer 411 is in contact with the metal layer 300. The first-second layer 412 is in contact with the first-first layer 411. Accordingly, the first-first layer 411 is disposed between the metal layer 300 and the first-second layer 412.

The second plating layer 420 includes a second-first layer 421 and a second-second layer 422. The second-first layer 421 is in contact with the metal layer 300. The second-second layer 422 is in contact with the second-first layer 421. Accordingly, the second-first layer 421 is disposed between the metal layer 300 and the second-second layer 422.

The third plating layer 430 includes a third-first layer 431 and a third-second layer 432. The third-first layer 431 is in contact with the metal layer 300. The third-second layer 432 is disposed in contact with the third-first layer 431. Accordingly, the third-first layer 431 is disposed between the metal layer 300 and the third-second layer 432.

The second plating layer 420 and the third plating layer 430 may include a same material. The second plating layer 420 and the third plating layer 430 may be formed with a same layer structure. Specifically, the second plating layer 420 may have the layer structure of FIG. 3. In addition, the third plating layer 430 may have a same layer structure as the second plating layer.

Therefore, the second plating layer 420 and the third plating layer 430 may be formed by a same process. Specifically, the second plating layer 420 and the third plating layer 430 may be formed simultaneously.

The smart IC substrate includes a protective layer 450. The protective layer 450 is disposed on the other surface 302 of the metal layer. The protective layer 450 is disposed on the second plating layer 420. In addition, the protective layer 450 is not disposed on the third plating layer 430. That is, the protective layer 450 is selectively disposed.

Specifically, the protective layer 450 is disposed on the second-second layer 422. The protective layer 450 may be in contact with the second-second layer 422. Alternatively, the second-second layer 422 may be oxidized during the process. Accordingly, an oxide layer 422a may be formed on the second-second layer 422. For example, the oxide layer 422a may include silver oxide (Ag₂O). Accordingly, the protective layer 450 may be disposed on the oxide layer 422a. Accordingly, the protective layer 450 may be in contact with the oxide layer 422a.

Since the material and thickness of the protective layer 450 are the same as those of the first embodiment, a detailed description thereof will be omitted.

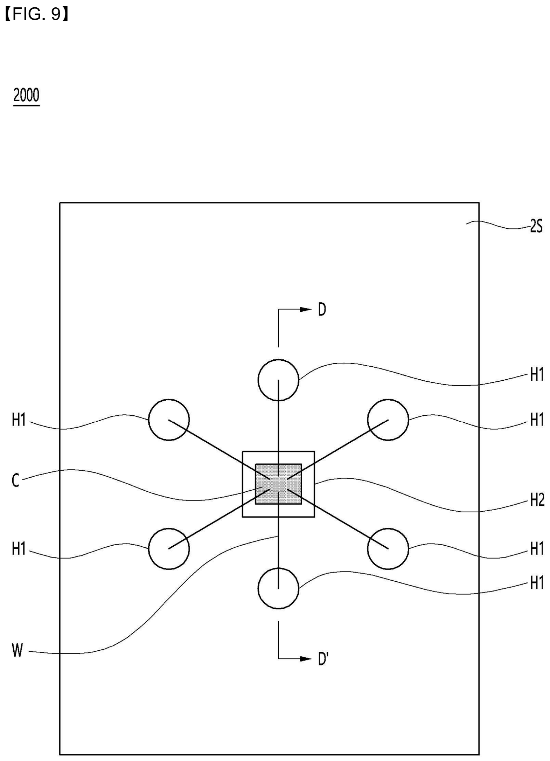

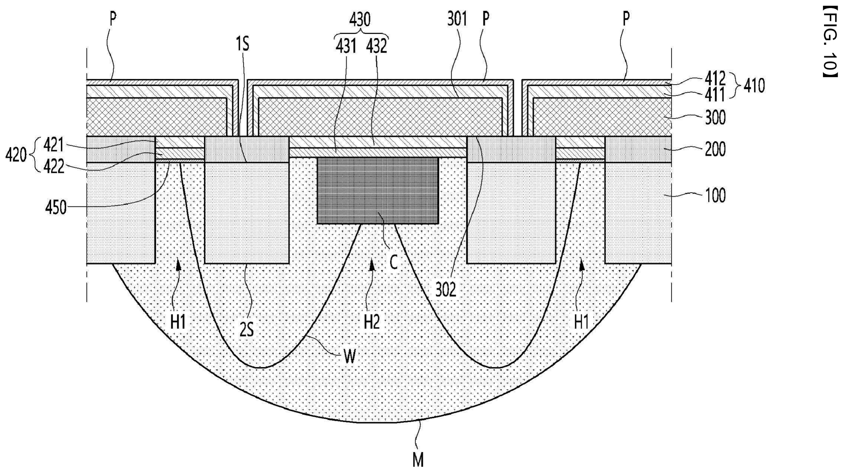

Hereinafter, a smart IC module according to the second embodiment will be described with reference to FIGS. 9 and 10.

Referring to FIGS. 9 and 10, the smart IC module 2000 includes the smart IC substrate 1000 and chip C described above.

The chip C is positioned within the second hole H2. Specifically, the chip C is disposed on the third plating layer 430.

The chip C is connected to the second plating layer 420. Specifically, the chip C and the second plating layer 430 are wire-bonded using a wire W. Accordingly, the chip C and the conductive patterns P are electrically connected.

A molding member M may be disposed on the chip C. The molding member M is disposed to cover the chip C and the wire W. This prevents damage to the wire bonding due to external impact.

A smart IC substrate according to the second embodiment includes a first hole and a second hole. Accordingly, the smart IC substrate includes a receiving portion in which a chip is disposed. Consequently, the thickness of the smart IC substrate manufactured using the smart IC substrate is reduced. In other words, the smart IC module is formed with a thin thickness. Accordingly, the thickness of the IC card can be reduced.

In addition, the smart IC substrate according to the second embodiment includes an optionally disposed protective layer. The protective layer is disposed on the plating layer to be wire-bonded. Specifically, the protective layer is disposed on the second plating layer.

The protective layer includes a metal with lower reactivity than the second-second layer. Therefore, the second-second layer can be prevented from oxidation or discoloration. Alternatively, when the second-second layer is partially oxidized during the process, the corrosion rate of the second-second layer can be reduced.

Therefore, the electrical conductivity and rigidity of the second plating layer are maintained. Therefore, it is possible to prevent damage to the second plating layer when wire bonding. In addition, the electrical connection characteristics between the chip and the conductive pattern after wire bonding are improved.

In addition, the corrosion rate of the second plating layer is reduced. Therefore, the electrical conductivity of the second plating layer is maintained. Therefore, the electrical connection characteristics between the chip and the conductive pattern can be maintained during use of the IC card.

In addition, the protective layer can be formed using the same process as the first-second layer. Therefore, a separate process for forming the protective layer is omitted. Accordingly, process efficiency can be improved.

In addition, the protective layer is not disposed on the third plating layer. Therefore, process efficiency is improved and process costs are reduced.

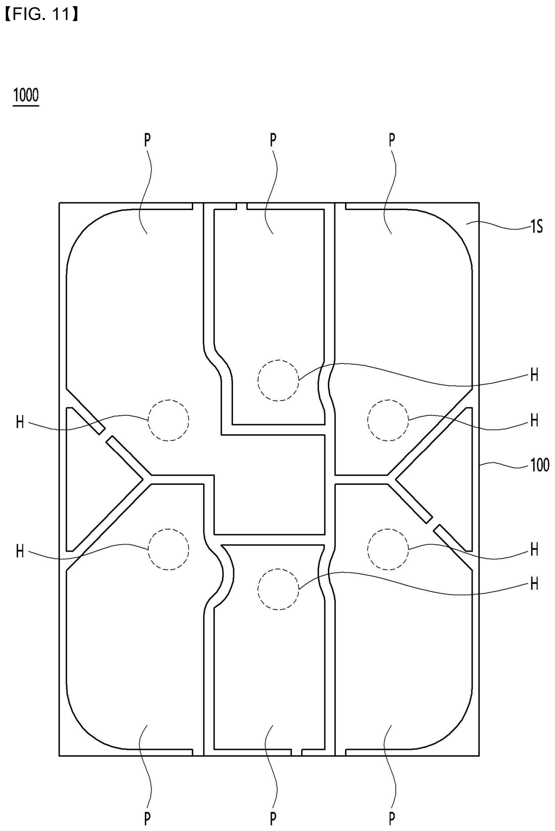

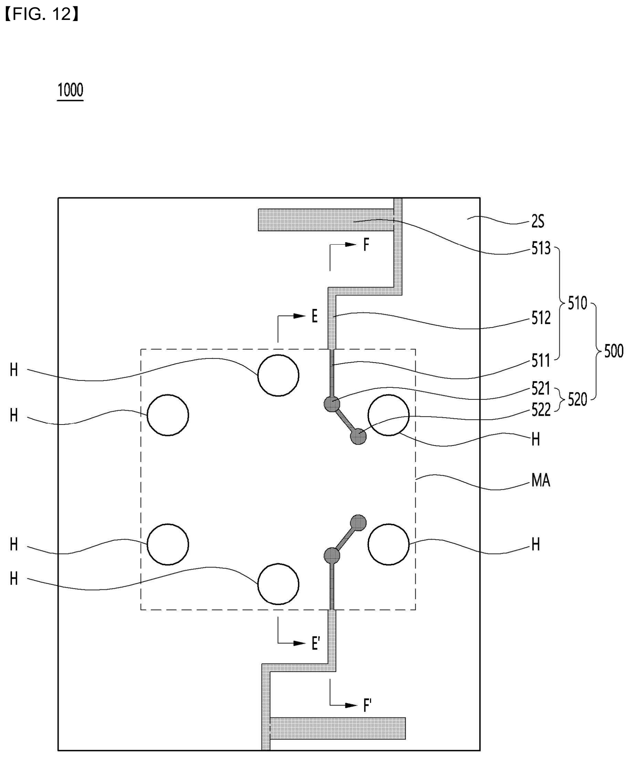

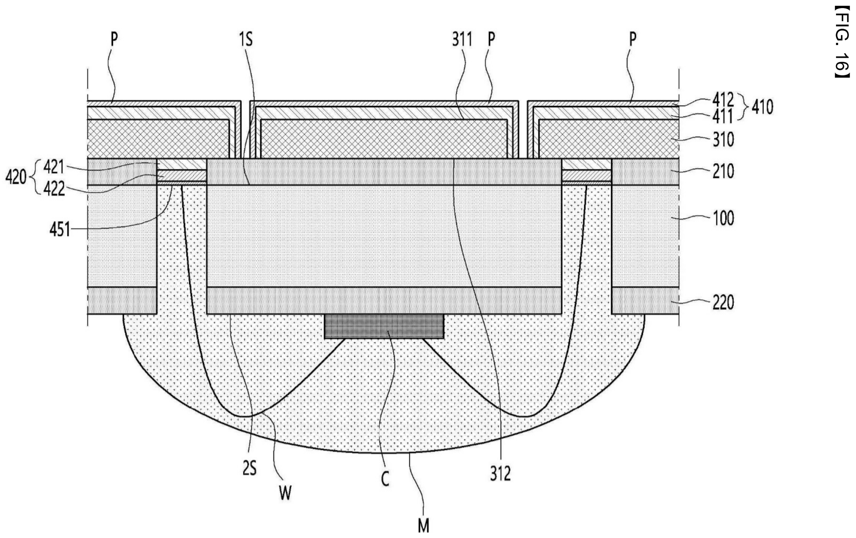

Hereinafter, a smart IC substrate and a smart IC module according to a third embodiment will be described with reference to FIGS. 11 to 18. Descriptions of similar or identical elements to those of the first embodiment will be omitted. In addition, identical reference numerals are used for identical components to those of the first embodiment.

Referring to FIGS. 11 to 14, the smart IC substrate includes a substrate 100, a bonding layer 200, a metal layer 300, and a plating layer.

The substrate 100 includes a first surface 1S and a second surface 2S. The first surface 1S and the second surface 2S are opposite surfaces. The first surface 1S is defined as a contact surface. The second surface 2S is defined as a bonding surface.

The material, shape, and thickness of the substrate 100 are the same as those of the first embodiment.

The substrate 100 includes a hole H. The hole H includes a plurality of holes. At least one of the plurality of holes is a region for wire bonding. For example, all of the plurality of holes are regions for wire bonding. Alternatively, some of the plurality of holes are regions for wire bonding. The chip C and the plating layer are wire bonded through the hole H.

The hole H has a width within a set range. The width of the hole H may be defined as a diameter of the hole or a minimum distance between the inner surfaces of the hole. For example, the width of the hole H may be 500 µm to 1,000 µm, 600 µm to 900 µm, or 700 µm to 800 µm. If the width of the hole H is less than 500 µm, wire bonding through the hole H becomes difficult. In addition, when the width of the hole H exceeds 1000 µm, the support force of the substrate 100 decreases.

The bonding layer 200 is disposed on the substrate 100. Specifically, the bonding layer 200 includes a first bonding layer 210 and a second bonding layer 220. The first bonding layer 210 is disposed on the first surface 1S. The second bonding layer 220 is disposed on the second surface 2S.

The material and thickness of the bonding layer 200 are the same as those of the first embodiment.

The metal layer 300 is disposed on the substrate 100. The metal layer 300 includes a first metal layer 310 and a second metal layer 320. The first metal layer 310 is disposed on the first bonding layer 210. The second metal layer 320 is disposed on the second bonding layer 220.

The material and thickness of the metal layer 300 are the same as those of the first embodiment.

The metal layer 300 includes a plurality of conductive patterns P. The conductive patterns P are formed by patterning the metal layer 300.

The conductive patterns P are disposed on the first surface 1S. The conductive patterns P are disposed on the bonding layer 200. The conductive patterns P are disposed on the contact surface.

The conductive patterns P are disposed spaced apart from each other. The holes H are disposed in regions corresponding to each conductive pattern P.

The smart IC substrate 1000 includes a wiring pattern 500. The wiring pattern 500 is disposed on the second surface 2S. The wiring pattern 500 is disposed on the second bonding layer 220. The wiring pattern 500 is disposed on the bonding surface.

The wiring pattern 500 is connected to an external antenna pattern. Accordingly, the smart IC module can be operated in a contactless manner.

The wiring pattern 500 may include a wiring part 510 and a connection part 520.

The wiring part 510 may include a first wiring part 511, a second wiring part 512, and a third wiring part 513. The first wiring part 511 and the connection part 520 are disposed inside a molding region MA. The second wiring part 512 and the third wiring part 513 are disposed outside the molding region MA.

The first wiring part 511 and the third wiring part 513 may be connected by the second wiring part 512.

The first wiring part 511, the second wiring part 512, and the third wiring part 513 may have different line widths. For example, the line width of the second wiring part 512 may be greater than that of the first wiring part 511. Accordingly, after the molding part M is disposed inside the molding region MA, damage to the wiring part disposed outside the molding part M can be prevented.

The line width of the third wiring part 513 may be greater than that of the first wiring part 511 and the second wiring part 512. The third wiring part 513 is a region connected to a card body. Since the line width of the third wiring part 513 is formed large, the smart IC substrate and the card body can be easily connected.

The connection part 520 may include a first connection part 521 and a second connection part 522. Specifically, at least one of the plurality of wiring patterns may include the first connection part 521 and the second connection part 522.

Sizes of the first connection part 521 and the second connection part 522 may be smaller than a size of the hole H. In addition, the size of the second connection part 522 may be smaller than the size of the third wiring part 513. For example, an area of the second connection part 522 may be smaller than an area of the third wiring part 513. As a result, a space of the chip mounting region can be secured widely, and a packaging size can be reduced.

In addition, the first connection part 521 or the second connection part 522 is wire-bonded to the chip. The connection part includes two or more connection parts. Therefore, if a problem occurs with wire bonding in one connection part, the problem can be resolved by wire bonding to another connection part. For example, if a problem occurs with wire bonding in the first connection part 521, additional wire bonding can be performed to the second connection part 522.

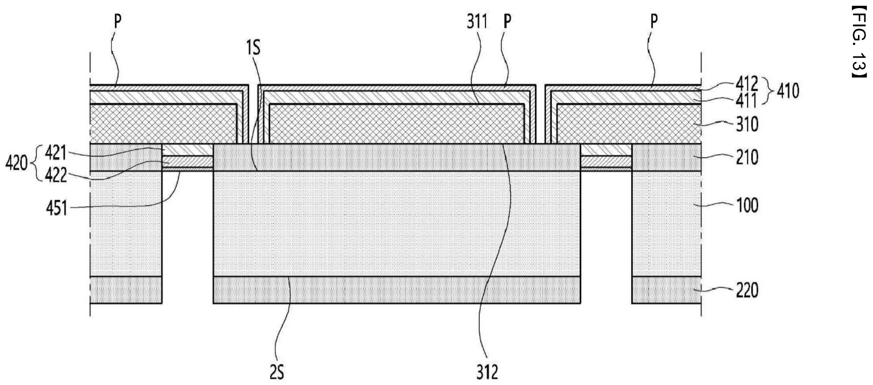

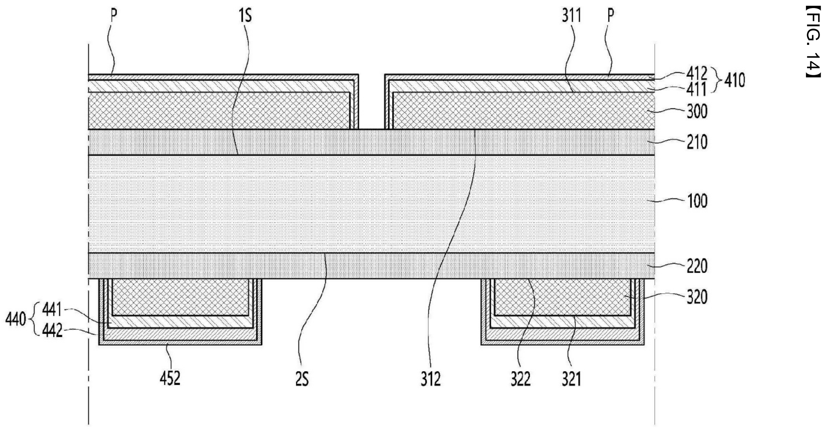

The plating layer is disposed on the metal layer 300. Referring to FIGS. 13 and 14, the plating layer is divided into multiple plating layers depending on their positions. Specifically, the plating layer may include a first plating layer 410, a second plating layer 420, and a fourth plating layer 440 disposed at different positions.

The first plating layer 410 is disposed on one surface 311 of the first metal layer 310. The second plating layer 420 is disposed on the other surface 312 of the first metal layer 310. The second plating layer 420 is disposed in a region overlapping the hole H. The second plating layer 420 may be a pad part to which the wire is bonded. The fourth plating layer 440 is disposed on one surface 321 of the second metal layer 320. The wiring pattern 500 is formed by the second metal layer 320 and the fourth plating layer 440. The fourth plating layer 440 may include a pad part to which the wire is bonded.

The first plating layer 410 includes a first-first layer 411 and a first-second layer 412. The first-first layer 411 is in contact with the first metal layer 310. The first-second layer 412 is in contact with the first-first layer 411. Accordingly, the first-first layer 411 is disposed between the first metal layer 310 and the first-second layer 412.

The second plating layer 420 includes a second-first layer 421 and a second-second layer 422. The second-first layer 421 is in contact with the first metal layer 310. The second-second layer 422 is in contact with the second-first layer 421. Accordingly, the second-first layer 421 is disposed between the first metal layer 310 and the second-second layer 422.

The fourth plating layer 440 includes a fourth-first layer 441 and a fourth-second layer 442. The fourth-first layer 441 is in contact with the second metal layer 320. The fourth-second layer 432 is in contact with the fourth-first layer 441. Accordingly, the fourth-first layer 441 is disposed between the second metal layer 320 and the fourth-second layer 442.

The fourth plating layer 440 may include the same material as the second plating layer 420. It may be formed with the same layer structure as the second plating layer 420 and the fourth plating layer 440. Specifically, the second plating layer 420 may have the layer structure of FIG. 3. In addition, the fourth plating layer 440 may have the same layer structure as the second plating layer.

The smart IC substrate includes a protective layer. The protective layer includes a first protective layer 451 and a second protective layer 452. The first protective layer 451 and the second protective layer 452 are disposed at different positions. The first protective layer 451 is disposed on the other surface 312 of the first metal layer. The second protective layer 452 is disposed on one surface 321 of the second metal layer.

The first protective layer 451 is disposed on the second plating layer 420. Specifically, the first protective layer 451 is disposed on the second-second layer 422. The first protective layer 451 may be in contact with the second-second layer 422. Alternatively, the second-second layer 422 may be oxidized during the process. Accordingly, an oxide layer 422a may be formed on the second-second layer 422. For example, the oxide layer 422a may include silver oxide (Ag₂O). Accordingly, the first protective layer 451 may be disposed on the oxide layer 422a. Accordingly, the first protective layer 451 may be in contact with the oxide layer 422a.

The second protective layer 452 is disposed on the fourth plating layer 440. Specifically, the second protective layer 452 is disposed on the fourth-second layer 442. The second protective layer 452 may be in contact with the fourth-second layer 442. Alternatively, the fourth-second layer 442 may be oxidized during the process. Accordingly, an oxide layer may be formed on the fourth-second layer 442. For example, the oxide layer may include silver oxide (Ag₂O). Accordingly, the second protective layer 452 may be disposed on the oxide layer. Accordingly, the second protective layer 452 may be in contact with the oxide layer.

The first protective layer 451 and the second protective layer 452 include a conductive material. For example, the first protective layer 451 and the second protective layer 452 may include a metal.

In detail, the first protective layer 451 may include a metal having lower reactivity than the second-second layer 422. In detail, the first protective layer 451 may include a metal having lower ionization tendency than the second-second layer 422. For example, the first protective layer 451 may include palladium (Pd), iridium (Ir), platinum (Pt), or gold (Au).

Furthermore, the second protective layer 452 may include a metal having lower reactivity than the fourth-second layer 442. In detail, the second protective layer 452 may include a metal having a lower ionization tendency than the fourth-second layer 442. For example, the second protective layer 452 may include palladium (Pd), iridium (Ir), platinum (Pt), or gold (Au).

The first protective layer 451 and the second protective layer 452 may include a same material. Alternatively, the first protective layer 451 and the second protective layer 452 may include different materials.

For example, the first protective layer 451 and the second protective layer 452 may include gold or palladium.

If the first protective layer 451 and the second protective layer 452 include gold or palladium, process efficiency may be improved. Specifically, when forming the first-second layer 412, at least one of the first protective layer 451 and the second protective layer 452 may be formed together. Accordingly, a process of forming the protective layers separately is omitted.

Since the thickness of the first protective layer and the second protective layer are the same as those of the first embodiment, a description thereof will be omitted.

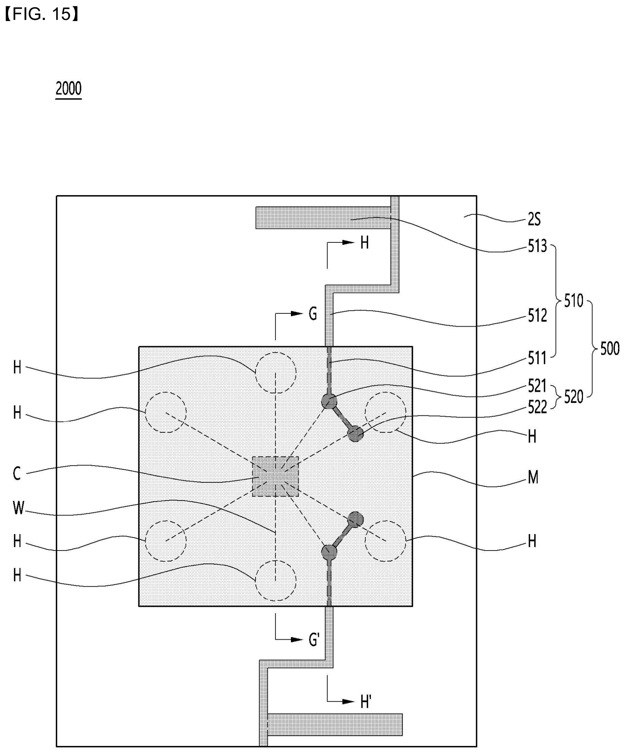

Hereinafter, a smart IC module according to a third embodiment will be described with reference to FIGS. 15 to 18.

Referring to FIGS. 15 to 18, the smart IC module 2000 includes the smart IC substrate 1000 and a chip C described above.

The chip C is disposed on the second bonding layer 220.

The chip C is connected to the second plating layer 420 and the fourth plating layer 440. Specifically, the chip C and the second plating layer 430 are wire-bonded by a wire W. Accordingly, the chip C and the conductive patterns P are electrically connected. In addition, the chip C and the fourth plating layer 440 are wire-bonded by the wire W. Accordingly, the chip C and the antenna pattern are electrically connected.

A molding member M is disposed on the chip C. The molding member M is disposed to cover the chip C and the wire W. Accordingly, damage to the wire due to external impact can be prevented.

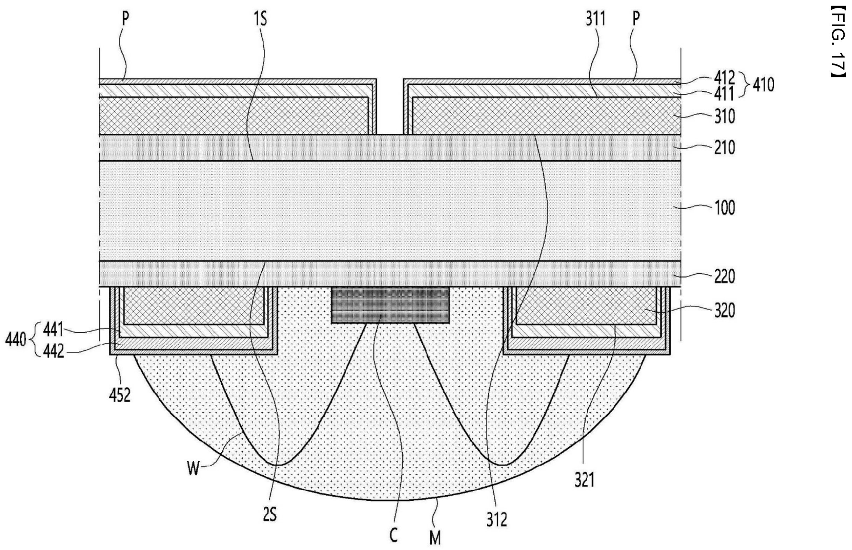

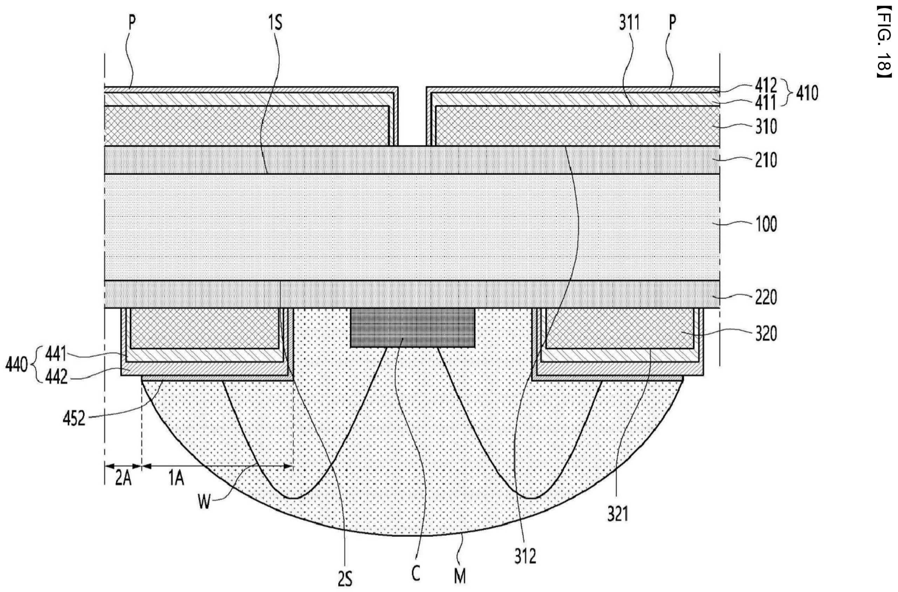

Referring to FIGS. 17 and 18, the second protective layer 452 may be selectively disposed.

Referring to FIG. 17, the second protective layer 452 may be disposed entirely on the fourth-second layer 442.

Referring to FIG. 18, the second protective layer 452 may be selectively disposed on the fourth-second layer 442.

The fourth plating layer 440 may include a first region 1A and a second region 2A. The first region 1A is a region to which the wire W is bonded. The first region 1A corresponds to the molding region. The first region 1A is a region where the molding member M is disposed. The first region 1A is a region where the first wiring part 511 and the connection part 520 are disposed. The second region 2A is a region where the wire W is not bonded. The second region 2A corresponds to a region other than the molding region. The second region 2A is a region where the molding member M is not disposed. The second region 2A is a region where the second wiring part 512 and the third wiring part 513 are disposed.

The second protective layer 452 may be disposed in the first region 1A. In addition, the second protective layer 452 may not be disposed in the second region 2A. That is, the second protective layer 452 is disposed in an inner region of the molding member and not in an outer region of the molding member.

A smart IC substrate according to the third embodiment includes a protective layer. The protective layer comprises a metal having lower reactivity than the second-second layer and the fourth-second layer. Accordingly, the second-second layer and the fourth-second layer can be prevented from oxidation or discoloration. Alternatively, when the second-second layer and the fourth-second layer are partially oxidized during the process, the corrosion rate of the second-second layer and the fourth-second layer can be reduced.

Therefore, the electrical conductivity and rigidity of the second plating layer and the fourth plating layer are maintained. Therefore, damage to the second plating layer and the fourth plating layer can be prevented during the wire bonding process. In addition, the electrical connection characteristics between the chip and the conductive pattern are improved after the wire bonding process.

Furthermore, the corrosion rate of the second plating layer and the fourth plating layer is reduced. Accordingly, the electrical conductivity of the second plating layer and the fourth plating layer is maintained. Therefore, the electrical connection characteristics between the chip and the conductive pattern can be maintained during use of the IC card.

Furthermore, the protective layer can be formed using the same process as the first-second layer. Therefore, a separate process for forming the protective layer is omitted. Consequently, process efficiency can be improved.

Furthermore, the protective layer is selectively disposed. Specifically, the second protective layer is selectively disposed on the fourth plating layer. Specifically, the second protective layer is positioned only on the inside of the molding member and not on the outside of the molding member. Therefore, process efficiency is improved and process costs are reduced.

Various variations of the second plating layer 420 of the embodiment will be described below. Specifically, a following description focuses on a structure of the second plating layer 420 that differs from the structure of the smart IC substrate of any of the structures illustrated in FIGS. 1 to 18.

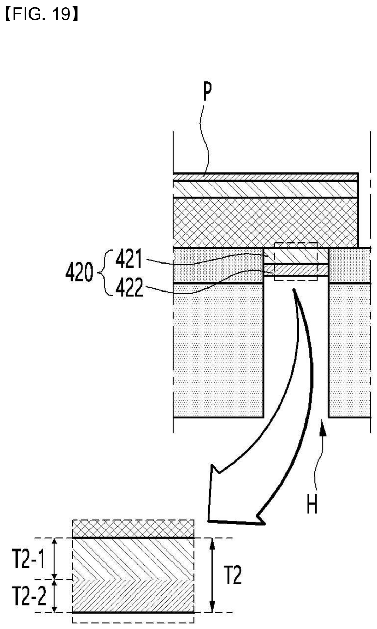

Referring to FIG. 19, the second plating layer 420 includes a second-first layer 421 and a second-second layer 422. The second-first layer 421 is disposed in contact with the metal layer 300. The second-second layer 422 is disposed in contact with the second-first layer 421. Accordingly, the second-first layer 421 is disposed between the metal layer 300 and the second-second layer 422. At this time, the second-first layer 421 may include nickel.

The first-second layer 412 and the second-second layer 422 may include different materials. Specifically, the first-second layer 412 and the second-second layer 422 may include different metals. For example, the first-second layer 412 may include gold (Au) or palladium (Pd). The second-second layer 422 includes a metal having different physical or chemical properties from the first-second layer 412. For example, a melting point of the second-second layer 422 may be lower than a melting point of the first-first layer 412. The second plating layer 420 is wire-bonded to the chip. The wire bonding is performed using heat and pressure. Since the melting point of the second-second layer 422 is lower, the second plating layer 420 is easily melted. Therefore, the wire bonding process becomes easier.

The electrical conductivity of the second-second layer 422 may be greater than the electrical conductivity of the first-first layer 412. The second plating layer 420 is wire-bonded to the chip. Since the electrical conductivity of the second-second layer 422 is high, a signal transmitted from the chip is easily transmitted through the second plating layer 420.

The resistance of the second-second layer 422 may be less than the resistance of the first-first layer 412. The second plating layer 420 is wire-bonded to the chip. Since the resistance of the second-second layer 422 is low, a signal transmitted from the chip is easily transmitted through the second plating layer 420. The thermal conductivity of the second-second layer 422 may be greater than the thermal conductivity of the first-first layer 412. The second plating layer 420 is wire-bonded to the chip. Heat is generated during the wire bonding. Since the second-second layer 422 has high thermal conductivity, it prevents heat from being concentrated in a specific region. That is, the second plating layer 420 may have heat dissipation characteristics. Therefore, the reliability of the smart IC substrate is improved. For example, the second-second layer 422 may include silver (Ag). The thickness T2 of the second plating layer 420 is greater than the thickness T1 of the first plating layer 410.

For example, the thickness T2-1 of the second-first layer 421 may be 2 µm to 9 µm. In addition, the thickness T2-2 of the second-second layer 422 may be 1 µm to 9 µm, 2 µm to 8 µm, or 3 µm to 7 µm. The second plating layer 420 is wire bonded to the chip C. Therefore, the thickness T2-2 of the second-second layer 422 is formed to be greater than the thickness of the first-second layer 412. If the thickness T3-2 of the second-second layer 422 is less than 1 µm, the wires are not stably bonded. In addition, if the thickness T2-2 of the second-second layer 422 exceeds 9 µm, process costs increase and process efficiency decreases.

In the smart IC substrate according to the fourth embodiment, the materials of the first plating layer and the second plating layer are different. The second-second layer has a lower melting point and resistance than the first-second layer. In addition, the second-second layer has higher electrical and thermal conductivity than the first-second layer. Accordingly, the process efficiency and electrical characteristics of the smart IC module are improved. In addition, the second-second layer is formed to a greater thickness than the first-second layer. In this case, the second-second layer is formed of a material other than gold. Therefore, process costs are reduced.

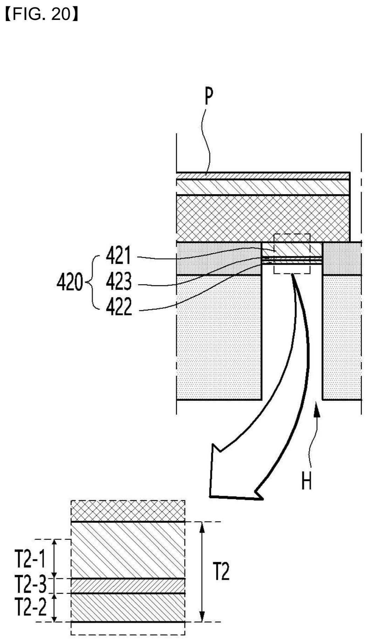

Referring to FIG. 20, the second plating layer 420 includes a second-first layer 421, a second-second layer 422, and a second-third layer 423. A description of the second-first layer 421 and the second-second layer 422 is as described based on FIG. 19.

The second-third layer 423 is disposed between the second-first layer 421 and the second-second layer 422. The second-third layer 423 includes a different material from the second-first layer 421. In addition, the second-third layer 423 includes a different material from the second-second layer 422. The second-third layer 423 may include a same material as the first plating layer 410. In detail, the second-third layer 423 includes the same material as the first-second layer 412. For example, the second-third layer 423 may include gold (Au).

The second-third layer 423 may be formed with a thin film thickness. For example, the thickness T2-3 of the second-third layer 423 may be the same as or similar to the thickness of the first-second layer 412. The second-third layer 423 and the first-second layer 412 may be formed by a same process. The second-third layer 423 and the first-second layer 412 may be formed simultaneously. For example, after forming the first-first layer 411 and the second-first layer 421, immersion plating may be performed. As a result, the first-second layer 412 and the second-third layer 423 may be formed on the first-first layer 411 and the second-first layer 421, respectively. For example, the thickness T2-3 of the second-third layer 423 may be 0.01 µm to 0.1 µm.

The smart IC substrate according to the fifth embodiment may further include the second-third layer. Accordingly, the second-second layer and the second-third layer may form a gold-silver alloy. Therefore, the hardness of the second plating layer is enhanced. Accordingly, cracking of the second plating layer can be prevented when wire-bonding the second plating layer and the chip. In addition, a material with high hardness can be used as the wire material. Therefore, wires of various materials can be used. In addition, the second-third layer may be formed using the same process as the first-second layer. In addition, the second-third layer is formed with a thin film thickness. Consequently, the process efficiency of the smart IC substrate is enhanced.

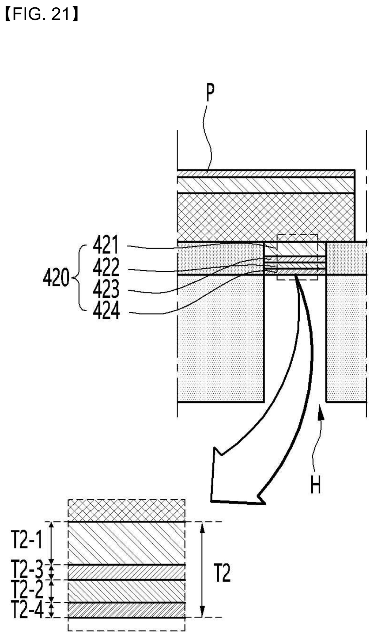

Referring to FIG. 21, the second plating layer 420 includes a second-first layer 421, a second-second layer 422, a second-third layer 423, and a second-fourth layer 424. The second-first layer 421 and the second-second layer 422 are described as in FIG. 19.

The second-third layer 423 is disposed between the second-first layer 421 and the second-second layer 422. The description of the second-third layer 423 is as in FIG. 20.

The second-fourth layer 424 is disposed on the second-second layer 422. The second-fourth layer 424 includes a different material from the second-first layer 421. In addition, the second-fourth layer 424 includes a different material from the second-second layer 422. The second-fourth layer 424 may include the same material as the second-third layer 423. In addition, the second-fourth layer 424 may include the same material as the first plating layer 410. In detail, the second-fourth layer 424 includes the same material as the first-second layer 412. For example, the second-fourth layer 424 may include gold (Au). The thickness T2-4 of the second-fourth layer 424 is different from the thickness T2-1 of the second-first layer 421. In detail, the thickness T2-4 of the second-fourth layer 424 is smaller than the thickness T2-1 of the second-first layer 421. The thickness T2-4 of the second-fourth layer 424 is different from the thickness T2-2 of the second-second layer 422. In detail, the thickness T2-4 of the second-fourth layer 424 is smaller than the thickness T2-2 of the second-second layer 422.

The second-fourth layer 424 may be formed with a thin film thickness. For example, the thickness T2-4 of the second-fourth layer 424 may be the same as or similar to the thickness T2-3 of the second-third layer 423. Alternatively, the thickness T2-4 of the second-fourth layer 424 may be the same as or similar to the thickness of the first-second layer 412. The second-fourth layer 424 and the first-second layer 412 may be formed by the same process. When the second-fourth layer 424 and the first-second layer 412 are formed by the same process, the second-third layer 423 and the first-second layer 412 are formed by different processes.

The second-fourth layer 424 and the first-second layer 412 may be formed simultaneously. For example, after forming the first-first layer 411 and the second-first layer 421, the second-third layer 423 and the second-second layer 422 may be sequentially formed on the second-first layer 421. Subsequently, immersion plating may be performed. As a result, the first-second layer 412 and the second-fourth layer 424 may be formed on the first-first layer 411 and the second-second layer 422, respectively. For example, the thickness T2-4 of the second-fourth layer 424 may be 0.01 µm to 0.1 µm.

The smart IC substrate according to the sixth embodiment may further include the second-third layer and the second-fourth layer. Accordingly, the second-second layer and the second-third layer may form a gold-silver alloy. In addition, the second-third layer and the second-fourth layer may form a gold-silver alloy. Therefore, the hardness of the second plating layer is enhanced. Accordingly, cracking of the second plating layer can be prevented when wire-bonding the second plating layer and the chip. In addition, a material with high hardness can be used as the wire material. Therefore, wires of various materials can be used.

Furthermore, the second-fourth layer may be formed using the same process as the first-second layer. In addition, the second-fourth layer is formed with a thin film thickness. Accordingly, the process efficiency of the smart IC substrate is enhanced. In addition, the surface of the second plating layer 420 may include gold. Therefore, corrosion of the second plating layer 420 can be prevented.

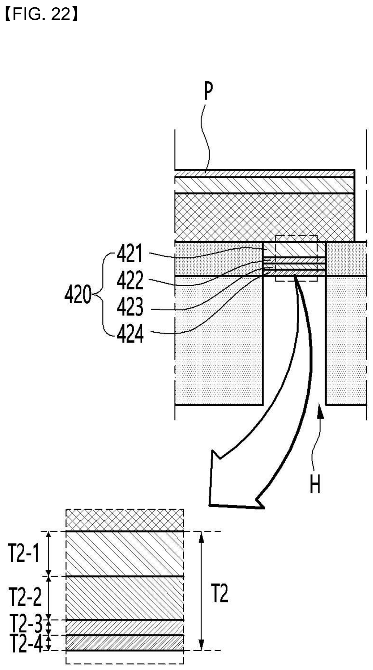

Referring to FIG. 22, the second plating layer 420 includes a second-first layer 421, a second-second layer 422, a second-third layer 423, and a second-fourth layer 424. The second-first layer 421 and the second-second layer 422 are described as in FIG. 19.

The second-third layer 423 is disposed on the second-second layer 422. The second-third layer 423 includes a different material from the second-first layer 421. In addition, the second-third layer 423 includes a different material from the second-second layer 422.

The second-third layer 423 may include the same material as the first plating layer 410. Specifically, the second-third layer 423 includes the same material as the first-second layer 412. For example, the second-third layer 423 may include gold (Au).

The thickness T2-3 of the second-third layer 423 is different from the thickness T2-1 of the second-first layer 421. Specifically, the thickness T2-3 of the second-third layer 423 is smaller than the thickness T2-1 of the second-first layer 421. The thickness T2-3 of the second-third layer 423 is different from the thickness T2-2 of the second-second layer 422. Specifically, the thickness T2-3 of the second-third layer 423 is smaller than the thickness T2-2 of the second-second layer 422.

The second-third layer 423 may be formed with a thin film thickness. For example, the thickness T2-3 of the second-third layer 423 may be the same as or similar to the thickness of the first-second layer 412. The second-third layer 423 and the first-second layer 412 may be formed by the same process. The second-third layer 423 and the first-second layer 412 may be formed simultaneously. For example, after forming the first-first layer 411 and the second-first layer 421, the second-second layer 422 may be formed on the second-first layer 421. Subsequently, immersion plating may be performed. As a result, the first-second layer 412 and the second-third layer 423 may be formed on the first-first layer 411 and the second-second layer 422, respectively. For example, the thickness T2-3 of the second-third layer 423 may be 0.01 µm to 0.1 µm.

The second-fourth layer 424 is disposed on the second-third layer 423. The second-fourth layer 424 includes a different material from the second-first layer 421. In addition, the second-fourth layer 424 includes a different material from the second-third layer 423.

The second-fourth layer 424 may include the same material as the second-second layer 422. For example, the second-fourth layer 424 may include silver (Ag).

The thickness T2-4 of the second-fourth layer 424 is different from the thickness T2-1 of the second-first layer 421. In detail, the thickness T2-4 of the second-fourth layer 424 is smaller than the thickness T2-1 of the second-first layer 421. The thickness T2-4 of the second-fourth layer 424 is different from the thickness T2-2 of the second-second layer 422. In detail, the thickness T2-4 of the second-fourth layer 424 is smaller than the thickness T2-2 of the second-second layer 422.

The second-fourth layer 424 may be formed with a thin film thickness. For example, the thickness T2-4 of the second-fourth layer 424 may be the same as or similar to the thickness T2-3 of the second-third layer 423. Alternatively, the thickness T2-4 of the second-fourth layer 424 may be the same as or similar to the thickness of the first-second layer 412. For example, the thickness T2-4 of the second-fourth layer 424 may be 0.01 µm to 0.1 µm.

The smart IC substrate according to the seventh embodiment may further include the second-third layer and the second-fourth layer. Accordingly, the second-second layer and the second-third layer may form a gold-silver alloy. In addition, the second-third layer and the second-fourth layer may form a gold-silver alloy. Therefore, the hardness of the second plating layer is enhanced. Accordingly, cracking of the second plating layer can be prevented when wire-bonding the second plating layer and the chip. In addition, a material with high hardness can be used as the wire material. Therefore, wires of various materials can be used. In addition, the second-fourth layer is formed with a thin film thickness. Accordingly, the process efficiency of the smart IC substrate is enhanced. In addition, the surface of the second plating layer 420 may include silver. Accordingly, the second plating layer 420 melts at a low temperature. Therefore, the second plating layer and the wire can be easily bonded.

Meanwhile, although not shown in the drawing, the first plating layer 410 may not be disposed on one surface 301 of the metal layer 300. For example, the metal layer 300 may include an alloy. For example, the metal layer 300 may include a nickel (Ni)-chromium (Cr)-iron (Fe) alloy. Accordingly, the corrosion resistance of the metal layer 300 may be improved. Therefore, even if a separate first plating layer 410 is not disposed on one surface 301 of the metal layer 300, corrosion of the metal layer 300 can be prevented. Therefore, a separate plating layer may not be disposed on the contact surface. In addition, the thickness of the smart IC substrate may be reduced.

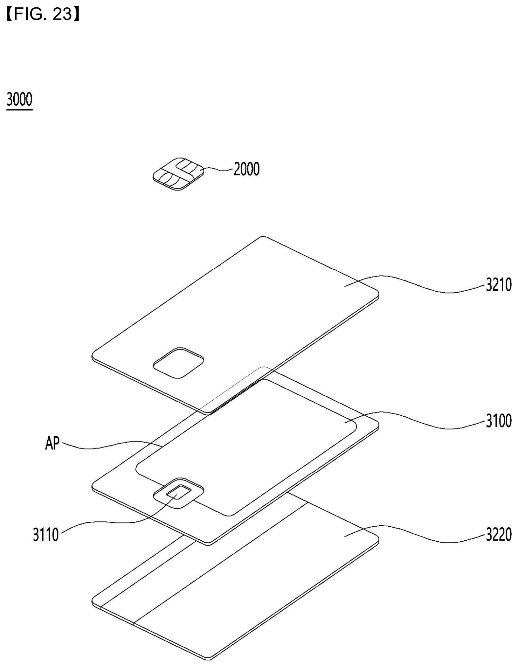

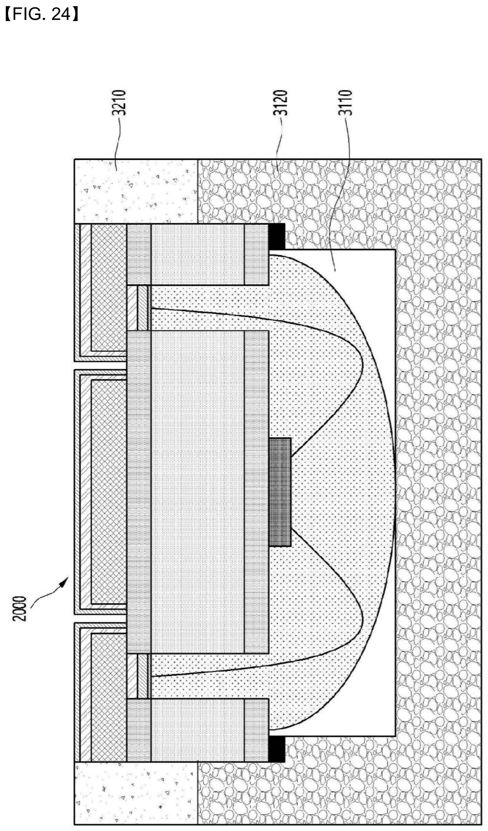

Hereinafter, an IC card according to an embodiment will be described with reference to FIGS. 23 and 24.

Referring to FIGS. 23 and 24, the IC card 3000 may include a body 3100, an upper layer 3210, and a lower layer 3220.

The body 3100 includes a receiving portion 3110. The smart IC module 2000 is disposed within the receiving portion 3110.

The IC card may be operated in various modes. For example, the IC card may be operated as a contact card.

Alternatively, an antenna pattern (not shown) may be disposed on the body 3100. Specifically, the antenna pattern may be disposed in a coil shape at an edge of the body 3100. Accordingly, the IC card may be operated as a contactless card, a combination card, or a hybrid card.

The smart IC module 2000 is inserted into the receiving portion 3110. The smart IC module 2000 and the body 3100 are bonded by an adhesive layer 3120. Thus, the smart IC module 2000 is inserted and fixed into the receiving portion 3110.

The upper layer 3210 is disposed on the upper portion of the body 3100. The upper layer 3210 may include a transparent material. The upper layer 3210 may include a transparent resin material. The upper layer 3210 may be disposed as at least one layer. That is, the upper layer 3210 may include multiple layers.

The lower layer 3220 is disposed on the lower portion of the body 3100. A magnetic stripe may be disposed on the lower layer 3220. The lower layer 3220 may include a transparent material. The lower layer 3220 may include a transparent resin material. The lower layer 3220 may be disposed in at least one layer. That is, the lower layer 3220 may include multiple layers.

The characteristics, structures and effects described in the embodiments above are included in at least one embodiment but are not limited to one embodiment. In addition, the characteristics, structures, and effects and the like illustrated in each of the embodiments may be combined or modified even with respect to other embodiments by those of ordinary skill in the art to which the embodiments pertain. Thus, it should be construed that contents related to such a combination and such a modification are included in the scope of the embodiment.

The description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the embodiment defined in the appended claims.

## Claims

1. A smart IC substrate comprising:
a substrate having a first surface and a second surface opposite the first surface;
a bonding layer disposed on the first surface;
a metal layer disposed on the bonding layer;
a first plating layer disposed on one surface of the metal layer; and
a second plating layer disposed on another surface of the metal layer,
wherein the first plating layer includes a first-first layer and a first-second layer on the first-first layer,
wherein the second plating layer includes a second-first layer and a second-second layer on the second-first layer,
wherein the second-second layer includes a metal different from a metal of the first-second layer;
wherein a protective layer is disposed on the second-second layer, and
wherein the protective layer includes a metal having a lower ionization tendency than the second-second layer.

2. The smart IC substrate of claim 1, wherein the protective layer includes a same metal as the first-second layer.

3. The smart IC substrate of claim 1, wherein a thickness of the second-second layer is greater than that of the first-second layer, and
wherein a thickness of the protective layer is less than that of the first-second layer.

4. The smart IC substrate of claim 1, wherein an organic coating layer is disposed on the first-second layer.

5. The smart IC substrate of claim 1, wherein a thickness of the first plating layer is smaller than that of the second plating layer.

6. The smart IC substrate of claim 1, wherein at least one of the first-second layer and the protective layer includes gold, and the second-second layer includes silver.

7. The smart IC substrate of claim 1, wherein an oxide layer is disposed between the second-second layer and the protective layer.

8. The smart IC substrate of claim 1, wherein the substrate includes a first hole and a second hole,
wherein a size of the first hole is smaller than a size of the second hole,
wherein the second plating layer is disposed in a region overlapping the first hole,
wherein the smart IC substrate further comprises a third plating layer disposed in a region overlapping the second hole,
wherein the third plating layer includes a third-first layer and a third-second layer on the third-first layer, and
wherein the protective layer is not disposed on the third-second layer.

9. A smart IC substrate comprising:
a substrate including a plurality of holes and a first surface and a second surface opposite the first surface;
a first bonding layer disposed on the first surface;
a second bonding layer disposed on the second surface;
a first metal layer disposed on the first bonding layer;
a second metal layer disposed on the second bonding layer;
a first plating layer disposed on one surface of the first metal layer;
a second plating layer disposed on another surface of the first metal layer; and
a fourth plating layer disposed on one surface of the second metal layer,
wherein the first plating layer includes a first-first layer and a first-second layer on the first-first layer,
wherein the second plating layer includes a second-first layer and a second-second layer on the second-first layer,
wherein the fourth plating layer includes a fourth-first plating layer and a fourth-second plating layer on the fourth-first plating layer,
wherein the second-second layer and the fourth-second plating layer includes metals different from a metal of the first-second layer,
wherein a first protective layer is disposed on the second-second layer,
wherein a second protective layer is disposed on the fourth-second layer,
wherein the first protective layer includes a metal having a lower ionization tendency than the second-second layer, and
wherein the second protective layer includes a metal having a lower ionization tendency than the fourth-second layer.

10. The smart IC substrate of claim 9, wherein at least one of the first protective layer and the second protective layer includes a same metal as the first and second layers.
